# EUROPÄISCHE PATENTANMELDUNG

(11) **EP 2 656 904 A1**
(43) Veröffentlichungstag der Anmeldung: **30.10.2013**
(21) Anmeldenummer: 12165620.1
(22) Anmeldetag: 26.04.2012
(51) Int. Cl.: B01D 53/94, B01J 23/42, B01J 23/44, B01J 23/52, B01J 29/08, B01J 29/18, B01J 29/40, B01J 29/70, B01J 29/80, B01J 35/00, B01J 37/02, F01N 3/10

(54) **Dieseloxidationskatalysator**

(71) Anmelder: Umicore AG & Co. KG, 63457 Hanau-Wolfgang (DE)
(72) Erfinder: Schuetze, Frank-Walter, 63808 Haibach (DE); Jeske, Gerald, 63543 Neuberg (DE); Symalla, Martin, 64291 Darmstadt (DE); Hengst, Christoph, 35510 Butzbach (DE)

(57) **Zusammenfassung**

Die vorliegende Erfindung betrifft ein Katalysator zur Reinigung von Abgasen von Dieselmotoren, der einen Tragkörper, eine erste katalytisch aktive Beschichtung, die Platin, Palladium, sowie eine Kohlenwasserstoff speichernde Verbindung wie Zeolith enthält und eine zweite katalytisch aktive Beschichtung, die Palladium, Gold und eventuell eine Kohlenwasserstoff speichernde Verbindung wie Zeolith enthält, umfasst, wobei die katalytisch aktiven Beschichtungen so auf dem Tragkörper angeordnet sind, dass die erste katalytisch aktive Beschichtung vor der zweiten katalytisch aktiven Beschichtung mit dem zu reinigenden Abgas in Kontakt kommt, seine Verwendung, sowie eine Abgasreinigungsanlage, die diesen Katalysator umfasst.

## Beschreibung

Die vorliegende Erfindung betrifft einen Katalysator zur Reinigung von Abgasen von Dieselmotoren, der als katalytisch aktive Komponenten Platin, Palladium und Gold enthält.

Das Abgas von Dieselmotoren enthält typischerweise Kohlenmonoxid CO, Kohlenwasserstoffe HC und Stickoxide NOₓ, sowie einen relativ hohen Seuerstoffgehalt von bis zu 15 Vol.-%. Außerdem sind Partikelemissionen enthalten, die überwiegend aus festen Russrückständen und gegebenenfalls organischen Agglomeraten (sog. "Volatite Organic Fraction" VOF oder "Soluble Organic Fraction" SOF) bestehen und aus einer partiell unvollständigen Kraftstoffverbrennung Im Zylinder herrühren. Die Schadgase Kohlenmonoxid und Kohlenwasserstoffe können durch Oxidation an einem geeigneten Oxidationskatalysator unschädlich gemacht werden. Zur Entfernung der Partikelemissionen sind Dieselpartikelfilter mit und ohne katalytisch aktive Beschichtung geeignete Aggregate. Stickoxide werden bevorzugt durch selektive katalytische Reduktion (Selective Catalytic Reduction SCR) mit Ammoniak als Reduktionsmittel zu Stickstoff umgesetzt. Üblicherweise wird Ammoniak aus Harnstoff gebildet, der in Form einer Lösung dem Abgas aus einer vom Motor unabhängigen Quelle zugefügt wird. Um die künftig in Europa, USA und Japan geltenden Abgasgrenzwerte einhalten zu können, werden häufig systemische Kombinationen dieser Abgasreinigungstechnologien eingesetzt.

Dieseloxidationskatalysatoren zur oxidativen Entfernung von Kohlenmonoxid (CO), gasförmigen Kohlenwasserstoffen (HC) und gegebenenfalls VOF sind im Stand der Technik seit langem bekannt und in den verschiedensten Ausführungsformen beschrieben. Zumeist werden die Edelmetalle Platin und/oder Palladium als oxidationskatalytisch aktive Komponenten eingesetzt. Edelmetalle katalysieren die verschiedenen, im System möglichen Oxidationsreaktionen mit unterschiedlicher Effektivität. So eignet sich Platin beispielsweise besonders gut zur Oxidation von im Rohabgas enthaltenen Stickstoffmonoxid NO zu Stickstoffdioxid NO₂, während Palladium die höchste Oxidationsaktivität aller Edelmetalle gegenüber kurzkettigen Kohlenwasserstoffen (HC) aufweist. Somit hängt es nicht selten von der Ausgestaltung des Abgassystems ab, ob ein Edelmetall alleine oder in Kombination mit anderen eingesetzt wird bzw. in welchen Mengenverhältnissen sie gegebenenfalls zueinander vorliegen.

Neben Platin und Palladium ist auch Gold ein oxidationsaktives Edelmetall. Es ist bekannt, dass es die Oxidation von Kohlenmonoxid zu Kohlendioxid bereits bei sehr niedrigen Temperaturen (< 100°C) hervorragend katalysiert. Auch Gold-haltige Katalysatoren zur oxidativen Nachbehandlung von Dieselabgasen sind bereits beschrieben worden.

So offenbart die EP 2 070 581 A1 einen Dieseloxidatlonskatalysator, der eine Beschichtung auf einem katalytisch inerten Tragkörper (z.B. Wabenkörper) aufweist, die neben einem Zeolithen Platin, Palladium und einen Promotor aufgebracht auf einem Trägeroxid enthält. Als Promotor kann unter anderem Gold eingesetzt werden. Auch die EP 1 925 362 A1 offenbart Dieseloxidationskatalysatoren, die Platin, Palladium und Gold enthalten. In einer Ausführungsform liegen in einem Schichtkatalysator Platin und Palladium einerseits und Palladium und Gold andererseits in getrennten Schichten vor. Beide Schichten sind durch eine Pufferschicht getrennt, die geträgertes Palladium, aber auch Zeolithe enthalten kann.

Auch die US 2008/125308A 1 beschreibt Abgaskatalysatoren, die einen Platin-haltigen Katalysator und einen Palladium und Gold-haltigen Katalysator umfassen und die daneben Zeolith als Absorbens für Kohlenwasserstoffe enthalten können. Die beiden Katalysatoren können in verschiedenen Schichten, getrennt durch eine Zeolith-haltige Schicht, angeordnet sein.

Die WO 2009/106849 A1 beschreibt Dieseloxidationskatalysatoren, die sich unter anderem durch hohe Konversionsraten für Methan auszeichnen und Palladium und Gold als aktive Komponenten bevorzugt in legierter Form enthalten.

Auch WO 2008/117941 A1 offenbart Dieseloxidationskatalysatoren, die mit Gold legiertes Palladium auf Aluminiumoxid enthalten und die sich durch eine verbesserte HC-Oxidationsaktivität auszeichnen

Es besteht weiterhin Bedarf nach Oxidationskatalysatoren zur Reinigung von Abgasen von Dieselmotoren, die bei akzeptable Materialkosten eine verbesserte Umsetzung von CO und HC aufweisen und zwar insbesondere auch noch nach hoher thermischer Belastung unter Betriebsbedingungen.

Die vorliegende Erfindung betrifft einen Katalysator zur Reinigung von Abgasen von Dieselmotoren, der
- einen Tragkörper,
- eine erste katalytisch aktive Beschichtung, die Platin, Palladium, sowie eine Kohlenwasserstoff speichernde Verbindung enthält und
- eine zweite katalytisch aktive Beschichtung, die Palladium und Gold enthält umfasst, wobei die katalytisch aktiven Beschichtungen so auf dem Tragkörper angeordnet sind, dass die erste katalytisch aktive Beschichtung vor der zweiten katalytisch aktiven Beschichtung mit dem zu reinigenden Abgas in Kontakt kommt.

Die erste katalytisch aktive Beschichtung weist insbesondere mehr Platin als Palladium auf. Das Gewichtsverhältnis von Platin zu Palladium liegt bevorzugt zwischen 12 : 1 und 1 : 0,9, besonders bevorzugt zwischen 6 : 1 bis 2 : 1 und ganz besonders bevorzugt bei 4:1.

Platin und Palladium können in der ersten katalytisch aktiven Beschichtung in Form einer Mischung vorliegen. Besonders bevorzugt liegt aber wenigstens ein Teil des vorhandenen Palladiums in mit Platin legierter Form vor.

Als Kohlenwasserstoff speichernde Verbindungen können prinzipiell alle bekannten Verbindungen mit dieser Eigenschaft verwendet werden. Bevorzugt sind aber Zeolithverbindungen mit HC-speichernden Eigenschaften. Dies sind insbesondere Zeolithe wie FAU, MOR, Zeolith beta, MFI, ZSM-5 und Mischungen davon. Die Kohlenwasserstoff speichernden Verbindungen liegen in der ersten katalytisch aktiven Schicht bevorzugt in Mengen von 10 bis 60 Gew.-%, besonders bevorzugt 20 bis 50 Gew.-% und ganz besonders bevorzugt 25 bis 35 Gew.-% vor, jeweils bezogen auf das Gesamtgewicht der der ersten katalytisch aktiven Beschichtung.

In der zweiten katalytisch aktiven Schicht liegen Palladium und Gold bevorzugt in Gewichtsverhältnissen von 0,9 - 1,1 : 1, besonders bevorzugt von 1 : 1, vor. Palladium und Gold können in Form einer Mischung vorliegen, bevorzugt aber in Form legierter Metalleluster. Die zweite katalytisch aktive Schicht ist bevorzugt im Wesentlichen frei von Platin. Dies bedeutet, dass der Platingehalt bei 0 bis 2 Gew.%, insbesondere bei 0 bis 0,5 Gew.-%, bezogen auf das Gesamtgewicht der zweiten katalytisch aktiven Schicht, liegt. Idealerweise ist die zweite katalytisch aktive Schicht aber frei von Platin, d.h. der Platingehalt liegt bei 0 Gew.%.

In einer Ausführungsform der vorliegenden Erfindung enthält auch die zweite katalytisch aktive Beschichtung eine Kohlenwasserstoff speichernde Verbindung. Wie bereits in der ersten katalytisch aktiven Beschichtung kommen dafür insbesondere Zeolithverbindungen mit HC-speichernden Eigenschaften in Frage, wobei Zeolithe wie FAU, MOR, Zeolith beta, MFI, ZSM-5 und Mischungen davon bevorzugt eingesetzt werden.

Sofern die zweite katalytisch aktive Schicht Kohlenwasserstoff speichernde Verbindungen enthält, liegen diese bevorzugt in Mengen von 5 bis 40 Gew.-%, besonders bevorzugt 10 bis 30 Gew. -% und ganz besonders bevorzugt 10 bis 20 Gew.-% vor, jeweils bezogen auf das Gesamtgewicht der der zweiten katalytisch aktiven Schicht.

Betrachtet man die erste und die zweite katalytisch aktive Beschichtung zusammen, so beträgt das Gewichtsverhältnis der in beiden Beschichtungen insgesamt enthaltenen Edelmetalle Platin: Palladium: Gold in den besonders bevorzugten Ausführungsformen bei 1:1:1.

Platin und Palladium in der ersten, sowie Palladium und Gold in der zweiten katalytisch aktiven Schicht liegen bevorzugt auf einem oder mehreren Trägeroxide fixiert vor. Geeignete Trägeroxide sind insbesondere hochschmelzende Oxide mit großen spezifischen Oberflächen. Typische Oberflächen liegen im Bereich von 10 bis 200m²/g (BET-Oberfläche, gemessen nach DIN 66132).

Bevorzugte Trägeroxide sind Ceroxid, Zirkonoxid, Aluminiumoxid, Siliziumoxid und Mischoxide und/oder Mischungen davon verwendet.

Besonders bevorzugt ist Aluminiumoxid, das insbesondere durch 2 bis 5 Gew.-% Lanthanoxid (La₂O₃) stabilisiert ist.

In einer bevorzugten Ausführungsform der vorliegenden Erfindung liegen Platin und Palladium in der ersten, sowie Palladium und Gold in der zweiten katalytisch aktiven Schicht auf Aluminiumoxid fixiert vor.

Als Trägkörper werden gemäß vorliegender Erfindung insbesondere die dem Fachmann bekannten inerten Tragkörper verwendet. Insbesondere handelt es sich dabei um Wabenkörper aus Metall oder bevorzugt aus Keramik, die als Durchflusswaberikörper oder auch als Wandflussfilterkörper ausgeführt sein können. Bevorzugt sind keramische Wabenkörper aus Cordierit.

Es ist außerdem besonders bevorzugt, wenn erste und zweite katalytisch aktive Schicht auf einem einzigen Tragkörper vorliegen.

In einer bevorzugten Ausführungsform der vorliegenden Erfindung ist der Tragkörper ein Durchflusswabenkörper.

Im erfindungsgemäßen Katalysator sind die katalytisch aktiven Beschichtungen so auf dem Tragkörper angeordnet, dass die erste katalytisch aktive Beschichtung vor der zweiten katalytisch aktiven Beschichtung mit dem zu reinigenden Abgas in Kontakt kommt. Dies kann durch verschiedene Anordnungen erreicht werden.

Gemäß einer ersten Alternative ist der erfindungsgemäße Katalysator als Schichtkatalysator ausgeführt, in dem die Beschichtungen übereinander liegen. Dies bedeutet, dass die zweite katalytisch aktive Beschichtung direkt auf den Tragkörper aufgebracht ist, während die erste katalytisch aktive Beschichtung auf die zweite katalytisch aktive Beschichtung aufgebracht ist und diese abgasseitig vollständig überdeckt.

Somit kann das den Tragkörper durchströmende Abgas nur dann mit der zweiten katalytisch aktiven Beschichtung in Kontakt kommen, wenn es vorher die erste katalytisch aktive Beschichtung durchdrungen hat.

Gemäß einer zweiten Alternative ist der erfindungsgemäße Katalysator als Zonenkatalysator ausgeführt. Dies bedeutet, dass die erste katalytisch aktive Beschichtung ausgehend vom ersten Ende des Tragkörpers (Eintrittsstirnfläche) nur auf einen Teil seiner gesamten Länge aufgebracht ist, während die zweite katalytisch aktive Beschichtung daran anschließend bis zum zweiten Ende des Tragkörpers (Austrittsstirnfläche) aufgebracht ist.

Bezeichnet L die gesamte Länge des Tragkörpers, E die Teillänge davon, die die erste katalytisch aktive Beschichtung trägt und Z die Teillänge davon, die die zweite katalytisch aktive Beschichtung trägt, gilt also idealerweise L = E + Z. In der Praxis ist es aber oft schwierig, die beiden Beschichtungen genau aneinander ("auf Stoß") anzuordnen, so dass erste und zweite katalytisch aktive Beschichtung in geringem Ausmaß überlappen können (d.h. L < E + Z) oder zwischen erster und zweiter katalytisch aktiver Beschichtung ein kurzer unbeschichteter Spalt verbleiben kann (d.h. L > E + Z).

In besonderen Ausführungsformen der vorliegenden Erfindung kann es aber durchaus erwünscht sein, dass sich beide Beschichtungen in geringem Ausmaß überlappen oder dass zwischen beiden Beschichtungen ein kurzer unbeschichteter Spalt verbleibt. Letztgenannte Variante bedeutet, dass zwischen erster und zweiter katalytisch aktiver Beschichtung kein Kontakt besteht, was gegebenenfalls vorteilhaft sein kann.

Ist der erfindungsgemäße Katalysator als Zonenkatalysator ausgeführt, muss er in das Abgassystem eines Kraftfahrzeugs so eingebaut werden, dass die Seite, die die erste katalytisch aktive Beschichtung trägt anströmseitig und die Seite, die die zweite katalytisch aktive Beschichtung trägt abströmseitig angeordnet ist.

Der guten Ordnung halber wird an dieser Stelle darauf hingewiesen, dass eine mögliche Ausführungsform, in der die zweite katalytisch aktive Beschichtung einen inneren Kern bildet, der von der ersten katalytisch aktiven Beschichtung als äußere Schale umhüllt wird, nicht zum Gegenstand der vorliegenden Erfindung gehört und davon ausgenommen ist.

Bevorzugte Ausführungsformen des erfindungsgemäßen Katalysators weisen neben der ersten und der zweiten katalytisch aktiven Beschichtung keine weitere Beschichtung auf. Bevorzugt befindet sich zwischen erster und zweiter katalytisch aktiver Beschichtung keine weitere Beschichtung, insbesondere keine weitere Beschichtung, die Palladium und/oder Zeolith enthält.

Die erfindungsgemäßen Katalysatoren können dadurch hergestellt werden, dass der Tragkörper in an sich bekannter Weise mit Washcoats, die die Bestandteile der ersten bzw. zweiten katalytisch aktiven Beschichtung, gegebenenfalls zusammen mit Hilfsstoffen enthalten, nacheinander beschichtet wird.

Soll also ein erfindungsgemäßer Schichtkatalysator hergestellt werden, so wird in einem ersten Schritt der Tragkörper über seine gesamte Länge mit einem Washcoat, der die Bestandteile der zweiten katalytisch aktiven Beschichtung enthält, beschichtet und anschließend getrocknet und gegebenenfalls kalziniert.

In einem zweiten Schritt wird dann auf die im ersten Schritt aufgetragene Beschichtung die erste katalytisch aktive Beschichtung mittels eines Washcoat, der die Bestandteile der ersten katalytisch aktiven Beschichtung enthält, aufgebracht. Auch daran schließt sich eine Trocknung und gegebenenfalls Kalzinierung an.

Soll ein erfindungsgemäßer Zonenkatalysator hergestellt werden, so wird im ersten Schritt der Tragkörper ausgehend von einem Ende mittels eines ersten Washcoats auf der gewünschten Teillänge und anschließend im zweiten Schritt ausgehend vom anderen Ende mittels eines zweiten Washcoats auf der verbleibenden Teillänge beschichtet. Dabei ist es unkritisch, welche Beschichtung in welchem Schritt aufgetragen wird. Man kann also zuerst die erste katalytisch aktive Beschichtung auftragen und dann die zweite katalytisch aktive Beschichtung oder umgekehrt.

Die Beschichtung des Tragkörpers mit Washcoat erfolgt bevorzugt nach einem dem Fachmann bekannten, konventionellen Tauch-, Saug- oder Pumpverfahren, Dabei wird die Washcoat-Menge so eingestellt, dass eine definierte Beladung erreicht wird.Typische Washcoatbeladungen bewegen sich zwischen 50 und 250 g/l Volumen des Tragkörpers.

Die in den oben beschriebenen Herstellungsverfahren eingesetzten Washcoats sind wässrige Suspensionen bzw. Aufschlämmungen, die die katalytisch aktiven Bestandteile, sowie gegebenenfalls Hilfsmittel enthalten.

So enthält der Washcoat zur Aufbringung der ersten katalytisch aktiven Beschichtung insbesondere auf ein oder mehrere Trägeroxide aufgebrachtes Platin und Palladium, während der Washcoat zur Aufbringung der zweiten katalytisch aktiven Beschichtung insbesondere auf ein oder mehrere Trägeroxide aufgebrachtes Palladium und Gold enthält.

Geeignete Hilfsmittel sind insbesondere Bindemittel

Die in die Washcoats eingebrachten mit Edelmetall belegten Trägeroxide können ebenfalls nach dem Fachmann an sich bekannten Verfahren hergestellt werden. Typische Verfahrensschritte sind beispielsweise die gegebenenfalls gestufte Cofällung und/oder Coimprägnierung der Edelmetalle aus wasserlöslichen Vorstufen auf Trägeroxide sowie das systematische Vermahlen pulverförmiger Vorstufen unter Bildung definierter Konglomerat. Zu beachten ist, dass während des gesamten Herstellprozesses pH-Werte im stark sauren Bereich (d.h. pH < 4), ebenso wie pH-Werte im stark basischen Bereich (d.h. pH > 8) konsequent vermieden werden sollten. Bevorzugt wird während des gesamten Herstellprozesses in einem pH-Wertebereich zwischen pH = 5 und pH = 7 gearbeitet. Falls pH-Variationen während des Herstellprozesses notwendig sind, werden vorzugsweise Essigsäure zur Absenkung des pH-Wertes und organische Basen wie Tetraethylammonium-hydroxid (TEAH) zur Anhebung des pH-Wertes eingesetzt.

Der erfindungsgemäße Katalysator eignet sich insbesondere zur oxidativen Verminderung von Kohlenmonoxid und/oder Kohlenwasserstoffen im Abgas von Dieselmotoren. Dazu wird das Abgas über den Katalysator geleitet. Er zeichnet sich insbesondere durch sehr hohe CO-Konvertierungsraten und durch eine außerordentlich hohe thermische Alterungsstabilität aus und weist somit wichtige Eigenschaften auf, die zur Applikation in modernen Abgasreinigungssystemen zur Verfüllung beispielsweise der unter "Euro 6" bekannten gesetzlichen Emissionsvorgaben unumgänglich sind. Weiterhin zeigt der erfindungsgemäße Katalysator Kostenvorteile gegenüber den ansonsten üblichen Katalysatoren, die in der Regel einen insgesamt deutlich höheren Anteil des teuersten Edelmetalls Platin enthalten.

Der erfindungsgemäße Katalysator wird bevorzugt als Bestandteil einer Abgasreinigungsanlage eingesetzt, die ebenfalls Gegenstand der vorliegenden Erfindung ist.

In der erfindungsgemäßen Abgasreinigungsanlage wird der erfindungsgemäße Katalysator bevorzugt motornah angeordnet. Motornah bedeutet im Sinne der vorliegende Anmeldung insbesondere, dass zwischen Motor und erfindungsgemäßem Katalysator kein weiterer Katalysator bzw. kein weitere Katalysatorbestandteil angeordnet ist.

Nach dem erfindungsgemäßen Katalysator ist bevorzugt in Strömungsrichtung des zu reinigenden Abgases ein Dieselpartikelfilter nachgeschaltet. Gegebenenfalls kann auf das Dieselpartikelfilter noch eine Entstickungsstufe folgen, so dass die effektive Verminderung aller im Dieselabgas enthaltenen, gesetzlich limitierten Schadstoffe sichergestellt ist.

Geeignete Dieselpartikelfilter und Entstickungsstufen wie NOₓ-Spetcher und SCR-Katalysatoren sind in der Literatur beschrieben und dem Fachmann bekannt.

### Beispiel

Ein handelsublicher Durchflusswabenkorper aus Cordierit mit einem Durchmesser von 143,8 mm Durchmesser, einer Länge von 76,2 mm und einem Volumen von 1,24 L wurde mittels eines üblichen Tauchverfahrens mit zwei ubereinander liegenden Katalysatorschichten versehen

Die untere, direkt auf dem Wabenkörper aufliegende Schicht der Katalysatorbeschichtung bestand aus 70,30 g/ L Pd/Au auf gamma-Aluminiumoxid, wobei die Konzentration des Pd 1.85 Masse % und die Konzentration des Au ebenfalls 1,85 Masse % betrug

Die obere Schicht (Deckschicht) setzte sich aus einer Mischung eines Pt und Pd enthaltenden Pulvers und einer zeolIthischen Komponente (Beta-Zeolith) zusammen Die Edelmetalle waren wiederum auf einem gamma-Aluminiumoxid getragert. Die Gesamtkonzentration von Pt und Pd wurde dabei mit 4,00 Masse% eingestellt, das Verhältnis von Pt zu Pd lag dabei bei 4 zu 1. Die Gesamtmenge der zweiten katalytischen Beschichtung lag dabei 91,50 g/L wovon 45 % dieser Menge durch die zeolithische Komponente gebildet wurde.

Nach dem Aufbringen der beiden katalytisch aktiven Schichten wurde der Katalysator bei 350°C kalziniert bzw. thermisch behandelt Die Gesamtkonzentration der drei Edelmetalle lag bei diesem erfindungsgemaßen Katalysator bei 4,591 g/L.

Nach einer hydrothermalen Alterung für 16 Stunden bei 750°C wurde an einem mit einem Dieselmotor betriebenen Kraftfahrzeug mittels NEDC (New European Drive Cycle) die pro km emittlerte Menge an Kohlenmonoxld mit 0,410 g/km bestimmt Dieser Wert liegt deutlich unter dem mit einem Vergleichskatalysator gemäß Stand der Technik erzielbaren Wert

## Patentansprüche

1. Katalysator zur Reinigung von Abgasen von Dieselmotoren, der
- einen Tragkörper,
- eine erste katalytisch aktive Beschichtung, die Platin, Palladium, sowie eine Kohlenwasserstoff speichernde Verbindung enthält und
- eine zweite katalytisch aktive Beschichtung, die Palladium und Gold enthält umfasst, wobei die katalytisch aktiven Beschichtungen so auf dem Tragkörper angeordnet sind, dass die erste katalytisch aktive Beschichtung vor der zweiten katalytisch aktiven Beschichtung mit dem zu reinigenden Abgas in Kontakt kommt.

2. Katalysator nach Anspruch 1, **dadurch gekennzeichnet, dass** das Gewichtsverhältnis von Platin zu Palladium in der ersten katalytisch aktiven Beschichtung 4 : 1 beträgt.

3. Katalysator nach einem der Ansprüche 1 und 2, **dadurch gekennzeichnet, dass** als Kohlenwasserstoff speichernde Verbindung in der ersten katalytisch aktiven Schicht eine Zeolithverbindung mit HC-speichernden Eigenschaften eingesetzt wird.

4. Katalysator nach Anspruch 3, **dadurch gekennzeichnet, dass** als Zeolithverbindung mit HC-speichernden Eigenschaften FAU, MOR, Zeolith beta, MFI, ZSM-5 oder Mischungen davon eingesetzt werden.

5. Katalysator nach einem oder mehreren der Ansprüche 1 bis 4, **dadurch gekennzeichnet, dass** die Kohlenwasserstoff speichernde Verbindung in Mengen von 25 bis 35 Gew.-% bezogen auf das Gesamtgewicht der ersten katalytisch aktiven Beschichtung eingesetzt wird.

6. Katalysator nach einem oder mehreren der Ansprüche 1 bis 5, **dadurch gekennzeichnet, das** Gewichtsverhältnis von Palladium zu Gold in der zweiten katalytisch aktiven Beschichtung 1 : 1 beträgt.

7. Katalysator nach einem oder mehreren der Ansprüche 1 bis 6, **dadurch gekennzeichnet, das** die zweite katalytisch aktive Beschichtung im Wesentlichen frei von Platin ist.

8. Katalysator nach einem oder mehreren der Ansprüche 1 bis 7, **dadurch gekennzeichnet, dass** die zweite katalytisch aktive Beschichtung eine Kohlenwasserstoff speichernde Verbindung enthält.

9. Katalysator nach Anspruch 8, **dadurch gekennzeichnet, dass** als Kohlenwasserstoff speichernde Verbindung in der zweiten katalytisch aktiven Schicht eine Zeolithverbindung mit HC-speichernden Eigenschaften eingesetzt wird.

10. Katalysator nach Anspruch 9, **dadurch gekennzeichnet, dass** als Zeolithverbindung mit HC-speichernden Eigenschaften FAU, MOR, Zeolith beta, MFI, ZSM-5 oder Mischungen davon eingesetzt werden.

11. Katalysator nach einem oder mehreren der Ansprüche 8 bis 10, **dadurch gekennzeichnet, dass** die Kohlenwasserstoff speichernde Verbindung in der zweiten katalytisch aktiven Beschichtung in Mengen von 10 bis 20 Gew.-% bezogen auf das Gesamtgewicht der zweiten katalytisch aktiven Beschichtung eingesetzt wird.

12. Katalysator nach einem oder mehreren der Ansprüche 1 bis 11, **dadurch gekennzeichnet, dass** Platin und Palladium in der ersten, sowie Palladium und Gold in der zweiten katalytisch aktiven Schicht auf einem oder mehreren Trägeroxide fixiert vorliegen.

13. Katalysator nach Anspruch 12, **dadurch gekennzeichnet, dass** als Trägeroxide Ceroxid, Zirkonoxid, Aluminiumoxid, Siliziumoxid und Mischoxide und/oder Mischungen davon verwendet werden.

14. Verwendung eines Katalysators nach einem oder mehreren der Ansprüche 1 bis 13 zur Verminderung von Kohlenmonoxid und/oder Kohlenwasserstoffen im Abgas von Dieselmotoren.

15. Abgasreinigungsanlage zur Behandlung der Abgase von Dieselmotoren, **dadurch gekennzeichnet, dass** sie einen Katalysator nach einem oder mehreren der Ansprüche 1 bis 13 umfasst.
